(19) **Europäisches Patentamt European Patent Office Office européen des brevets**

(11) **EP 4 636 750 A1**

(12) **EUROPEAN PATENT APPLICATION**
published in accordance with Art. 153(4) EPC

(43) Date of publication:
**22.10.2025 Bulletin 2025/43**

(21) Application number: **22968230.7**

(22) Date of filing: **16.12.2022**

(51) International Patent Classification (IPC):
***G09G 5/00*** (2006.01)

(52) Cooperative Patent Classification (CPC):
**G09G 5/00**

(86) International application number:
**PCT/CN2022/139506**

(87) International publication number:
**WO 2024/124522 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **DING, Yi**
**Dongguan, Guangdong 523860 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **RESOURCE RESELECTION METHOD AND APPARATUS, DATA TRANSMISSION METHOD AND APPARATUS, DEVICE, AND STORAGE MEDIUM**

(57) A resource reselection method and apparatus, a data transmission method and apparatus, a device, and a storage medium, which relate to the technical field of communications. The resource reselection method comprises: a terminal device determining a first CPE according to received sidelink control information (1110); and the terminal device reselecting a target resource according to the first CPE (1120). By means of the method, a terminal device can determine a corresponding CPE according to received sidelink control information, and when it is determined on the basis of the determined CPE that inter-terminal blocking is about to occur, resource reselection is triggered, thereby avoiding the problem of inter-terminal blocking, and increasing the success rate of the terminal device accessing a channel in an SL-U system.

1110

Determinesing, by a terminal device, a first CPE based on received sidelink control information

↓

1120

Reselecting, by the terminal device, a target resource based on the first CPE

FIG. 11

## Description

### TECHNICAL FIELD

Embodiments of the present disclosure relate to the technical field of communications, and particularly relate to a method and apparatus for resource reselection, a method and apparatus for data transmission, and a device and a storage medium thereof.

### RELATED ART

A cyclic prefix extension (CPE) transmission mechanism is introduced to sidelink unlicensed (SL-U) systems, that is, a CPE is transmitted prior to an automatic gain control (AGC) symbol, i.e., a slot, to occupy a channel. Moreover, a plurality of CPE transmission start points may be configured, that is, different SL-U terminals transmit CPEs from different start points.

However, in a case where various SL-U terminals transmit CPEs from different start points, the SL-U terminals in the system interfere with channel accesses of other SL-U terminals, that is, the problem of inter-UE blocking occurs.

### SUMMARY

The embodiments of the present disclosure provide a method and apparatus for resource reselection, a method and apparatus for data transmission, and a device and a storage medium thereof. The technical solutions are as follows.

In an aspect of the embodiments of the present disclosure, a method for resource reselection is provided. The method is performed by a terminal device and includes:

determining a first CPE based on received sidelink control information; and
reselecting a target resource based on the first CPE.

In another aspect of the embodiments of the present disclosure, a method for data transmission is provided. The method is performed by a terminal device and includes:

determining a second CPE based on received sidelink control information; and
transmitting data based on the second CPE.

In another aspect of the embodiments of the present disclosure, an apparatus for resource reselection is provided. The apparatus includes:

a determining module, configured to determine a first CPE based on received sidelink control information; and
a reselecting module, configured to reselect a target resource based on the first CPE.

In another aspect of the embodiments of the present disclosure, an apparatus for data transmission is provided. The apparatus includes:

a determining module, configured to determine a second CPE based on received sidelink control information; and
a transmitting module, configured to transmit data based on the second CPE.

In another aspect of the embodiments of the present disclosure, a terminal device is provided. The terminal device includes: a processor and a memory; wherein the memory is configured to store one or more computer programs; and the processor is configured to load and run the one or more computer programs to perform the above method for resource reselection or the above method for data transmission.

In another aspect of the embodiments of the present disclosure, a computer-readable storage medium is provided. The computer-readable storage medium stores one or more computer programs, wherein the one or more computer programs, when loaded and run by a processor, cause the processor to perform the above method for resource reselection or the above method for data transmission.

In another aspect of the embodiments of the present disclosure, a chip is provided. The chip includes: a programmable logic circuit and/or one or mor program instructions, wherein the chip, when running, is caused to perform the above method for resource reselection or the above method for data transmission.

In another aspect of the embodiments of the present disclosure, a computer program product is provided. The computer program product includes: one or mor computer instructions stored in a computer-readable storage medium, wherein a processor is configured to load and run the one or more computer instructions from the computer-readable storage medium to perform the above method for resource reselection or the above method for data transmission.

The technical solutions according to the embodiments of the present disclosure achieve at least the following beneficial effects.

In one aspect, the terminal device can determine the corresponding CPE based on the received sidelink control information, and triggers resource reselection in a case where inter-UE blocking is determined, based on the determined CPE, to occur. In this way, the inter-UE blocking is avoided, and the success rate of accessing channels by the terminal devices in the SL-U system is increased.

In another aspect, the terminal device can determine the length of the CPE, used for transmission, of the terminal device based on the received sidelink control information, thereby ensuring that the CPEs of a plurality of terminals transmitted in the same time unit have an equal length. In this way, the inter-UE blocking is avoided, and the success rate of accessing channels by the terminal devices in the SL-U system is increased.

## BRIEF DESCRIPTION OF DRAWINGS

FIG. 1 is a schematic diagram of a network architecture according to some embodiments of the present disclosure;

FIG. 2 is a schematic diagram of a physical layer structure of SL communication according to some embodiments of the present disclosure;

FIG. 3 is a schematic diagram of time-frequency resource position reservation according to some embodiments of the present disclosure;

FIG. 4 is a schematic diagram of resource monitoring and resource selection according to some embodiments of the present disclosure;

FIG. 5 is a schematic diagram of an interlaced resource bock (IRB) according to some embodiments of the present disclosure;

FIG. 6 is a schematic diagram of division of a resource block set according to some embodiments of the present disclosure;

FIG. 7 is a schematic diagram of a reevaluation mechanism according to some embodiments of the present disclosure;

FIG. 8 is a schematic diagram of a resource preemption mechanism according to some embodiments of the present disclosure;

FIG. 9 is a schematic diagram of a CPE transmission according to some embodiments of the present disclosure;

FIG. 10 is a schematic diagram of inter-UE blocking according to some embodiments of the present disclosure;

FIG. 11 is a flowchart of a method for resource reselection according to some embodiments of the present disclosure;

FIG. 12 is a schematic diagram of resource reselection according to some embodiments of the present disclosure;

FIG. 13 is a schematic diagram of resource exclusion according to some embodiments of the present disclosure;

FIG. 14 is a flowchart of a method for data transmission according to some embodiments of the present disclosure;

FIG. 15 is a schematic diagram of adjustment of a CPE length according to some embodiments of the present disclosure;

FIG. 16 is a block diagram of an apparatus for resource reselection according to some embodiments of the present disclosure;

FIG. 17 is a block diagram of an apparatus for data transmission according to some embodiments of the present disclosure; and

FIG. 18 is a schematic structural diagram of a terminal device according to some embodiments of the present disclosure.

## DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenarios described in the embodiments of the present disclosure are intended to describe the technical solutions according to the embodiments of the present disclosure more clearly, but do not constitute any limitation on the technical solutions according to the embodiments of the present disclosure. Those of ordinary skilled in the art understand that, with the evolution of the network architecture and the emergence of new service scenarios, the technical solutions according to the embodiments of the present disclosure are also applicable to similar technical problems.

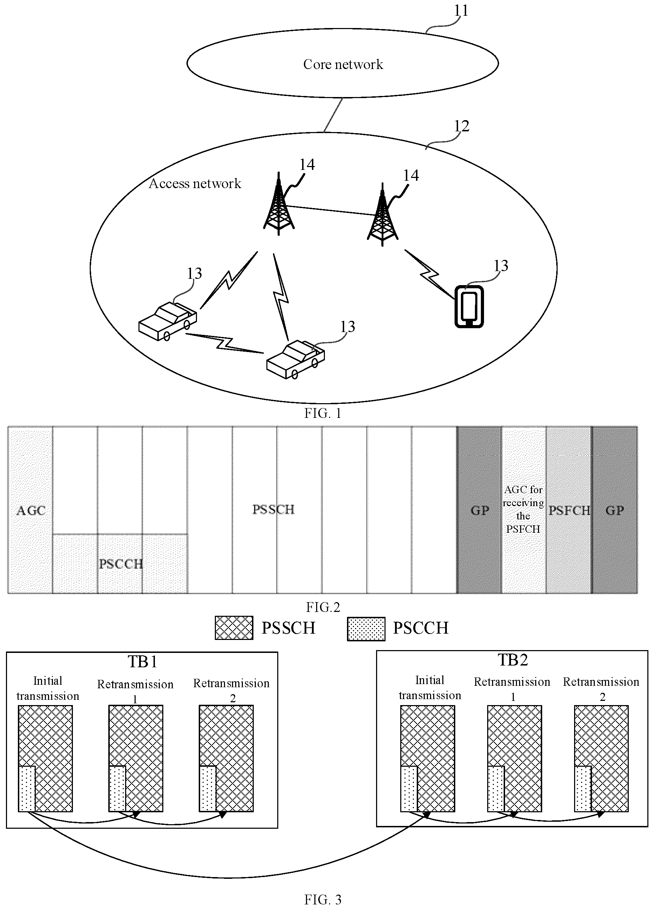

Referring to FIG. 1, a schematic diagram of a network architecture according to some embodiments of the present disclosure is illustrated. The network architecture includes: a core network 11, an access network 12, and terminal devices 13.

The core network 11 includes a plurality of core network devices. The core network devices mainly function to provide user connection, user management, and service bearing, and serve as a bearer network to provide an interface to an external network. For example, the core network of a 5th generation mobile communication (5G) new radio (NR) system includes devices such as an access and mobility management function (AMF) entity, a user plane function (UPF) entity, and a session management function (SMF) entity.

The access network 12 includes a plurality of access network devices 14. The access network in the 5G NR system may be referred to as a new generation-radio access network (NG-RAN). The access network devices 14 refer to apparatuses deployed in the access network 12 to provide wireless communication functionality for the terminal devices 13. The access network device 14 includes various forms of macro base stations, micro base stations, relay stations, access points, and the like. The name of the device with functionality of an access network device varies in systems employing different radio access technologies. For example, the device is referred to as a gNodeB or a gNB in the 5G NR system. With the evolution of communication technologies, the name "access network device" may change. For the convenience of description, the above apparatuses providing the wireless communication functionality for the terminal devices 13 are collectively referred to as the access network device in the embodiments of the present disclosure.

Typically, a plurality of terminal devices 13 are provided, and one or more terminal devices 13 may be arranged in a cell managed by each of the access network devices 14. The terminal devices 13 may include various handheld devices, in-vehicle devices, wearable devices, computing devices, other processing devices connected to a radio modem with the wireless communication functionality, various forms of user equipments (UEs), mobile stations (MS), and the like. For convenience of description, the devices described above are collectively referred to as the terminal devices. The access network devices 14 communicate with the core network devices using an air interface technology, such as an NG interface in the 5G NR system. The access network devices 14 communicate with the terminal devices 13 using an air interface technology, such as a Uu interface. The "terminal device" in the embodiments of the present disclosure is also referred to as the UE, which have the same meaning and are interchangeable. Those skilled in the art understanding its meaning.

The terminal devices 13 (for example, the in-vehicle device and another device, such as another in-vehicle device, a mobile phone, or a road side unit (RSU)) may communicate with each other over a direct communication interface (for example, a PC5 interface). Accordingly, the communication link established based on the direct communication interface may be referred to as a direct link or an SL. The SL transmission means that data transmission is directly carried out between the terminal devices over an SL, which is different from a conventional cellular system in which the communication data is received or transmitted by the access network device. The SL transmission has characteristics of short delay and low overhead, and is therefore suitable for communication between two terminal devices that are geographically close to each other (such as an in-vehicle device and another peripheral device that is geographically close to the in-vehicle device). It should be noted that, in FIG. 1, only vehicle-to-vehicle communication in a vehicle-to-everything (V2X) scenario is illustrated, while the SL communication is applicable to various scenarios where terminal devices directly communicate with each other. In other words, the terminal device in the present disclosure refers to any device that communicates with another device over the SL.

The "5G NR system" in the embodiments of the present disclosure may also be referred to as a 5G system or an NR system, but those skilled in the art can understand the meaning thereof. The technical solutions according to the embodiments of the present disclosure are applicable to the 5G NR system, and also to evolved systems of the 5G NR system.

Before description of the technical solutions of the present disclosure, some background technical knowledge involved in the present disclosure is first explained. The following related technologies may be combined with the technical solutions according to the embodiments of the present disclosure in any manner, all of which fall within the scope of protection of the embodiments of the present disclosure. The embodiments of the present disclosure include at least some of the following content.

1. SL Transmission

Regarding the SL transmission, 3GPP has defined two transmission modes: a mode A and a mode B.

In the mode A, transmission resources of the terminal device are allocated by an access network device (such as a base station). The terminal device transmits communication data over the sidelink based on the transmission resources allocated by the access network device. The access network device may allocate transmission resources to the terminal device for single transmission, or allocate transmission resources to the terminal device for semi-static transmission.

In the mode B, the terminal device selects transmission resources from a resource pool autonomously for the transmission of communication data. Specifically, the terminal device may select transmission resources from the resource pool either by monitoring or by random selection.

Next, SL communication in NR V2X systems where the terminal device autonomously selects resources (i.e., the mode B described above) is mainly described.

2. NR V2X Physical Layer Structure

A physical layer structure of SL communication in the NR V2X system is shown in FIG. 2. The first symbol in the slot shown in FIG. 2 is an AGC symbol. In a case where an SL UE receives data, a receive power is adjusted to a power suitable for demodulation in the symbol. In a case where the SL UE transmits data, content of a next symbol of the symbol is repeatedly transmitted on the AGC symbol. In FIG. 2, a physical sidelink control channel (PSCCH) is configured to bear first-stage sidelink control information, and a physical sidelink shared channel (PSSCH) is configured to bear data and second-stage sidelink control information. The PSCCH and the PSSCH are transmitted in the same slot. The first sidelink control information and the second sidelink control information may be two pieces of sidelink control information having different functions. For example, the first sidelink control information is carried in the PSCCH and mainly includes fields related to resource monitoring, thereby facilitating other terminal devices to perform resource exclusion and resource selection upon decoding. In the PSSCH, the second sidelink control information is further carried in addition to data, and mainly includes fields related to data demodulation, thereby facilitating other terminal devices to demodulate the data in the PSSCH. A slot may include a symbol corresponding to a physical sidelink feedback channel (PSFCH). The PSFCH is configured to transmit hybrid automatic repeat request (HARQ) feedback information. Depending on configuration of the resource pool, the symbol corresponding to the PSFCH occurs once every one, two, and four slots. In a case where a slot does not include the symbol corresponding to the PSFCH, for example, a guard period (GP) (that is, a GAP) symbol between the PSSCH and the PSFCH, the AGC for receiving the PSFCH, and a PSFCH symbol in FIG. 2 are all configured to carry the PSSCH. In general, a last symbol in the slot is the GP symbol, that is, GAP. Alternatively, a symbol subsequent to the last symbol carrying the PSSCH or the PSFCH is the GP symbol. The SL UE performs reception-transmission conversion within the GP symbol, but does not transmit data. In a case where a slot includes a PSFCH resource, a GP symbol is present between the PSSCH and the PSFCH symbols. This is because the UE transmits data over the PSSCH and receives data over the PSFCH, and the GP symbols is required for reception-transmission conversion.

3. Resource Reservation in NR V2X

In the NR V2X system, in the mode B, the terminal device selects transmission resources autonomously for data transmission. Resource reservation is a prerequisite for resource selection.

The resource reservation means that the terminal device transmits the first sidelink control information in the PSCCH to reserve resources to be used. The NR V2X system supports both intra-transport block (TB) resource reservation and inter-TB resource reservation.

As shown in FIG. 3, the terminal device transmits the first sidelink control information, and indicates N time-frequency resources (including a resource for current data transmission) of a current TB by using the Time Resource Assignment and Frequency Resource Assignment fields in the first sidelink control information. $N \leq N_{max}$, and $N_{max}$ is equal to 2 or 3 in NR V2X. Meanwhile, the N indicated time-frequency resources should be arranged in W slots. W is equal to 32 in NR V2X. In the TB1 shown in FIG. 3, the terminal device transmits the first sidelink control information in the PSCCH while transmitting initial transmission data in the PSSCH, and indicates time-frequency resource positions for initial transmission and retransmission 1 (i.e., N=2) using the two fields described above. That is, a time-frequency resource for retransmission 1 is reserved. Moreover, initial transmission and retransmission 1 are arranged and carried out across 32 slots in a time domain. Similarly, in the TB1 shown in FIG. 3, the terminal device indicates time-frequency resource positions for retransmission 1 and retransmission 2 using the first sidelink control information transmitted in the PSCCH of retransmission 1, and retransmission 1 and retransmission 2 are arranged and carried out across 32 slots in the time domain.

Besides, in transmitting the first sidelink control information, the terminal device performs the inter-TB resource reservation using a Resource Reservation Period field. For example, in FIG. 3, in transmitting the first sidelink control information of initial transmission of the TB1, the terminal device indicates time-frequency resource positions for initial transmission and retransmission 1 of the TB1 using the Time Resource Assignment and Frequency Resource Assignment fields, which are denoted as $\{(t_1, f_1), (t_2, f_2)\}$. $t_1$ and $t_2$ represent the time domain positions of initial transmission and retransmission 1 resources of the TB1, and $f_1$ and $f_2$ represent the corresponding frequency domain positions. In a case where a value of the Resource Reservation Period field in the first sidelink control information is 100 ms, the sidelink control information (SCI) simultaneously indicates the time-frequency resources $\{(t_1+100, f_1), (t_2+100, f_2)\}$. The two resources are used for the initial transmission and the retransmission 1 of TB2. Similarly, the first sidelink control information transmitted in retransmission 1 of the TB1 also reserves time-frequency resources for retransmission 1 and retransmission 2 of the TB2 using the Resource Reservation Period field. In NR V2X, possible values for the Resource Reservation Period field are 0, 1-99, 100, 200, 300, 400, 500, 600, 700, 800, 900, and 1000 ms, offering greater flexibility compared to LTE V2X.

However, only e values are configured in each resource pool, and the terminal device determines a possible value to be used based on the used resource pool. The e values in the resource pool configuration are denoted as a resource reservation period set M, and exemplarily, e is less than or equal to 16.

In addition, the inter-TB reservation may be activated or deactivated on a resource pool basis by means of network configuration or pre-configuration. In a case where the inter-TB reservation is activated, the first sidelink control information includes the Resource Reservation Period field. In a case where the inter-TB reservation is deactivated, the first sidelink control information does not include the Resource Reservation Period field. In a case where the inter-TB reservation is activated, the value of the Resource Reservation Period field used by the terminal device, i.e., the resource reservation period, is generally not changed prior to trigger of resource reselection. The terminal device reserves resources for a next period using the Resource Reservation Period field in the first sidelink control information for transmission of another TB each time the terminal device transmits the first sidelink control information, such that periodic semi-persistent transmission is achieved.

In a case where the terminal device operates in the mode B, the terminal device acquires, by monitoring the PSCCHs from another terminal device, the first sidelink control information transmitted by the another terminal device to acknowledge the resources reserved by another terminal device. In resource selection, the terminal device excludes the resources reserved by the another terminal device to avoid resource collision.

4. Resource Selection Method for NR V2X Monitoring

In the NR V2X system, the terminal device needs to select resources autonomously in the mode B.

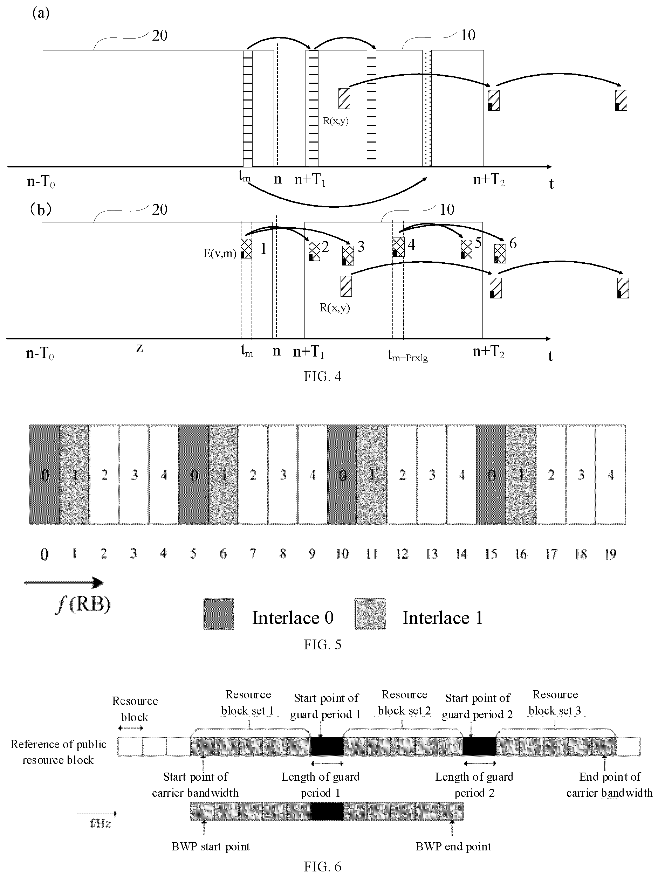

As shown in FIG. 4, the terminal device triggers resource selection or reselection in a slot n, or the slot n is a slot where a higher layer triggers a physical layer to report a candidate resource set. A resource selection window 10 starts from $n+T1$ and ends at $n+T_2$. $0 \leq T_1 \leq T_{proc,1}$, and $T_{proc,1}$ represents 3, 5, 9, or 17 slots in a case where the subcarrier spacing is 15, 30, 60, or 120 kHz. $T_{2min} \leq T_2 \leq$ a remaining delay budget of services, and a value set of $T_{2min}$ is $\{1, 5, 10, 20\}*2\mu$ slots. $\mu=0, 1, 2,$ or 3, which correspond to the subcarrier spacing being 15, 30, 60, or 120 kHz respectively. The terminal device determines $T_{2min}$ from the value set based on a priority of its own to-be-transmitted data. For example, in a case where the subcarrier spacing is 15 kHz, the terminal device determines $T_{2min}$ from the set $\{1, 5, 10, 20\}$ based on the priority of its own to-be-transmitted data. In a case where $T_{2min}$ is greater than or equal to the remaining delay budget of service, $T_2$ is equal to the remaining delay budget of service. The remaining delay budget means a difference between a corresponding time of a delay requirement of the data and a current time. For example, for a packet arriving in the slot n, the delay requirement is 50 ms. Assuming that least one slot is 1 ms, then the remaining delay budget is 50 ms in a case where the current time is the slot n, and the remaining delay budget is 30 ms in a case where the current time is a slot n+20.

The terminal device monitors resources from $n-T_0$ to $n-T_{proc,0}$ (excluding $n-T_{proc,0}$), and a value of $T_0$ is 100 or 1100 ms. In a case where the subcarrier spacing is 15, 30, 60, or 120 kHz, $T_{proc,0}$ represents 1, 1, 2, or 4 slots. In some embodiments, the terminal device monitors resources in a slot that is within a resource pool used by the terminal device within a resource monitoring window. In some embodiments, the terminal device monitors the first sidelink control information transmitted by another terminal device in each slot (except for its own transmission slot), and the terminal device uses the results of resource monitoring in $n-T_0$ to $n-T_{proc,0}$ upon trigger of resource selection or reselection in the slot n.

In step 1, the terminal device determines all available resources within the resource pool used by the terminal device in the resource selection window 10 as a resource set A, and any of the resources in the set A is denoted as the resource R(x, y). x and y respectively represent a frequency domain position and a time domain position of the resource. An initial number of the resources in the set A is denoted as $M_{total}$. The terminal device excludes resources in the resource set A based on a non-monitored slot in the resource monitoring window 20 (step 1-1) and/or resource monitoring results in the resource monitoring window 20 (step 1-2). The terminal device determines whether the resource R(x, y) or a series of periodic resources corresponding to the resource R(x, y) are overlapped with a slot determined based on the non-monitored slot in step 1-1 or a resource determined based on the monitored first sidelink control information in step 1-2, and excludes the resource R(x, y) from the resource set A in a case where these resources are overlapped with each other.

In step 1-1, in a case where the terminal device transmits data in the slot $t_m$ within the resource monitoring window 20 but does not carry out monitoring, the terminal device determines corresponding Q slots based on the slot $t_m$ and each allowed resource reservation period in the resource pool used by the terminal device, with the resource reservation period as an interval. In a case where the Q slots are overlapped with the resource R(x, y) or the series of periodic resources corresponding to the resource R(x, y), the resource R(x, y) is excluded from the resource set A. $Q=1$ or $Q=\lceil T_{scal}/P_{rx} \rceil$ (for rounding up). $T_{scal}$ is equal to a value of $T_2$ converted into milliseconds. $P_{rx}$ represents one of the resource reservation periods allowed by the resource pool used by the terminal device. In some embodiments, a series of periodic resources corresponding to the resource R(x, y) are $R(x, y+j*P_{txlg})$, $j=0,1,2,\cdots,C_{resel-1}$. $C_{resel}$ is related to a random count value generated by the terminal device, and $P_{txlg}$ represents the number of logical slots converted from $P_{tx}$. $P_{tx}$ represents the resource reservation period of the terminal device. For example, the case that $C_{resel}$ is equal to 3 in FIG. 4(a) means three periodic resources corresponding to the resource R(x, y) (including the resource R(x, y)).

For example, in FIG. 4(a), the terminal device does not carry out monitoring in the slot $t_m$, but performs resource exclusion in sequence based on each resource reservation period in the resource reservation period set M in the used resource pool configuration. For a resource reservation period 1, assuming that the Q value is calculated as 2, then the corresponding Q slots are two subsequent slots mapped from the slot $t_m$ in FIG. 4(a) as indicated by a horizontal line shadow, with the resource reservation period 1 as an interval. For a resource reservation period 2, assuming that the Q value is calculated as 1, then the corresponding Q slots are one subsequent slot mapped from the slot $t_m$ in FIG. 4(a) as indicated by a dotted shadow, having the resource reservation period 2 as an interval.

The terminal device determines whether Q slots corresponding to each reservation period are overlapped with the resource R(x, y) or a series of periodic resources corresponding to the resource R(x, y), and excludes the resource R(x, y) from the resource set A in a case where these resources are overlapped with each other.

In some embodiments, in a case where the inter-TB reservation is deactivated for the resource pool used by the terminal device, the terminal device does not perform step 1-1.

In some embodiments, upon completion of step 1-1, in a case where the number of remaining resources in the resource set A is less than $M_{total}*X$, the resource set A is initialized into all available resources within the resource pool used by the terminal device in the resource selection window 10, and then step 1-2 is performed.

In step 1-2, in a case where the terminal device monitors the first sidelink control information transmitted in the PSCCH within the slot $t_m$ of the resource monitoring window 20, a sidelink reference signal received power (SL-RSRP) of the PSCCH or an SL-RSRP of the PSSCH scheduled by the PSCCH (that is, the SL-RSRP of the PSCCH transmitted in the same slot as the PSCCH) is measured.

In a case where the measured SL-RSRP is greater than an SL-RSRP threshold and the first sidelink control information received by the terminal device includes the Resource Reservation Period field, the terminal device determines the corresponding Q slots based on the slot $t_m$ and the resource reservation period carried in the monitored first sidelink control information, with the resource reservation period as an interval. The terminal device assumes that the first sidelink control information with the same content is received in the Q slots. The terminal device determines whether the resources indicated in the Time Resource Assignment and Frequency Resource Assignment fields of the first sidelink control information received in the slot $t_m$ and the Q pieces of the first sidelink control information assumed to be received are overlapped with the resource R(x, y) or a series of periodic resources corresponding to the resource R(x, y), and excludes the corresponding resource R(x, y) from the set A in a case where these resources are overlapped with each other. Q=1 or $Q=\lceil T_{scal}/P_{rx}\rceil$ (for rounding up). $T_{scal}$ is equal to a value of $T_2$ converted into milliseconds. $P_{rx}$ represents the resource reservation period carried in the monitored first sidelink control information. In some embodiments, a series of periodic resources corresponding to the resource R(x, y) are R(x, y+j*$P_{txlg}$), j=0, 1, 2, $\cdots$, $C_{resel-1}$. $C_{resel}$ is related to a random count value generated by the terminal device, and $P_{txlg}$ represents the number of logical slots converted from $P_{txx}$. $P_{tx}$ represents the resource reservation period of the terminal device. for example, the case that the $C_{resel}$ is equal to 3 in FIG. 4(b) means three periodic resources corresponding to the resource R(x, y) (including the resource R(x, y)).

For example, in FIG. 4(b), in a case where the first sidelink control information received by the terminal device includes the Resource Reservation Period field, the terminal device monitors the first sidelink control information in the PSCCH in the slot tm resource E(v, m), having the resource reservation period in the field being $P_{rx}$. Assuming that the Q value is calculated as 1, then the terminal device assumes that the first sidelink control information with the same content is also received in the slot $t_{m+Prxlg}$. The terminal device determines whether the resources 1, 2, 3, 4, 5, and 6 indicated in the Time Resource Assignment and Frequency Resource Assignment fields of the first sidelink control information received in the slot $t_m$ and the first sidelink control information assumed to be received in the slot $t_{m+Prxlg}$ are overlapped with the resource R(x, y) or a series of periodic resources corresponding to the resource R(x, y), and excludes the resource R(x, y) from the resource set A in a case where these resources are overlapped with each other and the RSRP condition is met.

In a case where the SL-RSRP measured by the terminal device is greater than the SL-RSRP threshold and the first sidelink control information received by the terminal device does not include the Resource Reservation Period field, the terminal device only determines whether the resource indicated in the Time Resource Assignment and Frequency Resource Assignment fields of the first sidelink control information received in the slot $t_m$ is overlapped with the resource R(x, y) or a series of resources corresponding to the resource R(x, y), and excludes the resource R(x, y) from the resource set A in a case where these resources are overlapped with each other.

For example, in FIG. 4(b), in a case where the first sidelink control information received by the terminal device does not include the Resource Reservation Period field, and the terminal device monitors the first sidelink control information in the PSCCH in the slot tm resource E(v, m), the terminal device determines whether the resources 1, 2, and 3 indicated in the Time Resource Assignment and Frequency Resource Assignment fields in the first sidelink control information are overlapped with the resource R(x, y) or a series of periodic resources corresponding to the resource R(x, y), and excludes the resource R(x, y) from the resource set A in a case where these resources are overlapped with each other and the RSRP condition is met.

In a case where the number of the remaining resources in the resource set A upon the resource exclusion is less

than $M_{total}*X$, the SL-RSRP threshold is raised by 3 dB, and step 1 is performed again. The physical layer reports the resource set A upon resource exclusion to a higher layer as a candidate resource set.

In step 2, the higher layer randomly selects resources from the reported candidate resource set for data transmission. That is, the terminal device randomly selects resources from the candidate resource set for data transmission.

It should be noted that:

1. The RSRP threshold is determined based on the priority P1 carried in the PSCCH monitored by the terminal device and the priority P2 of the data to be transmitted by the terminal device. The configuration of the resource pool used by the terminal device includes an SL-RSRP threshold table, and the SL-RSRP threshold table includes SL-RSRP thresholds corresponding to all priority combinations. The resource pool may be configured on the network or preconfigured.

For example, as listed in Table 1, it is assumed that the selectable values of the priority levels of both P1 and P2 are 0 to 7, the SL-RSRP thresholds corresponding to different priority combinations are represented by $\gamma_{ij}$. In $\gamma_{ij}$, i is a value of the priority level P1, and j is a value of the priority level P2.

Table 1: SL-RSRP threshold table

| P1 \ P2 | 0 | 1 | 2 | 3 | 4 | 5 | 6 | 7 |
|---|---|---|---|---|---|---|---|---|
| 0 | $\gamma_{00}$ | $\gamma_{01}$ | $\gamma_{02}$ | $\gamma_{03}$ | $\gamma_{04}$ | $\gamma_{05}$ | $\gamma_{06}$ | $\gamma_{07}$ |
| 1 | $\gamma_{10}$ | $\gamma_{11}$ | $\gamma_{12}$ | $\gamma_{13}$ | $\gamma_{14}$ | $\gamma_{15}$ | $\gamma_{16}$ | $\gamma_{17}$ |
| 2 | $\gamma_{20}$ | $\gamma_{21}$ | $\gamma_{22}$ | $\gamma_{23}$ | $\gamma_{24}$ | $\gamma_{25}$ | $\gamma_{26}$ | $\gamma_{27}$ |
| 3 | $\gamma_{30}$ | $\gamma_{31}$ | $\gamma_{32}$ | $\gamma_{33}$ | $\gamma_{34}$ | $\gamma_{35}$ | $\gamma_{36}$ | $\gamma_{37}$ |
| 4 | $\gamma_{40}$ | $\gamma_{41}$ | $\gamma_{42}$ | $\gamma_{43}$ | $\gamma_{44}$ | $\gamma_{45}$ | $\gamma_{46}$ | $\gamma_{47}$ |
| 5 | $\gamma_{50}$ | $\gamma_{51}$ | $\gamma_{52}$ | $\gamma_{53}$ | $\gamma_{54}$ | $\gamma_{55}$ | $\gamma_{56}$ | $\gamma_{57}$ |
| 6 | $\gamma_{60}$ | $\gamma_{61}$ | $\gamma_{62}$ | $\gamma_{63}$ | $\gamma_{64}$ | $\gamma_{65}$ | $\gamma_{66}$ | $\gamma_{67}$ |
| 7 | $\gamma_{70}$ | $\gamma_{71}$ | $\gamma_{72}$ | $\gamma_{73}$ | $\gamma_{74}$ | $\gamma_{75}$ | $\gamma_{76}$ | $\gamma_{77}$ |

In a case where the terminal device monitors the PSCCH transmitted by another terminal device, the terminal device acquires the priority P1 carried in the first sidelink control information transmitted in the PSCCH and the priority P2 of the to-be-transmitted data, and determines an SL-RSRP threshold by looking up in Table 1.

2. Whether the terminal device compares the measured PSCCH-RSRP or a PSSCH-RSRP scheduled by the PSCCH with the SL-RSRP threshold depends on the resource pool configuration of the resource pool used by the terminal device. The resource pool configuration may be configured on the network or preconfigured.

3. The value of X as described above is possibly {20%, 35%, 50%}. The configuration of the resource pool used by the terminal device includes correspondence between the priorities and the possible values described above, and the terminal device determines the value of X based on the priority of the to-be-transmitted data and the correspondence. The resource pool may be configured on the network or preconfigured.

The above description is for the SL communication method in NR-V2X. That is, the terminal device autonomously selects transmission resources by resource monitoring and autonomously performs data transmission on the sidelink. The SL communication method is applicable to various SL communications such as direct communication between handheld terminals and direct communication between pedestrians and vehicles.

5. Physical Layer Structure of Unlicensed SL (SL-U)

In a case where the NR SL technology operates in the unlicensed spectrum, regulatory requirements in relevant areas, such as occupied channel bandwidth (OCB) and power spectral density (PSD) requirements, need to be considered in the system design. For example, for unlicensed spectrum within the 5 GHz frequency range, European regulatory requirements include minimum OCB and maximum PSD requirements. For the OCB requirement, the occupied channel bandwidth should not be less than 80% of the total channel bandwidth in a case where the terminal device performs data transmission over the channel; and for SL-U, reference may be made to the IRB structure in NR-U to satisfy the OCB occupancy requirement. For example, the 80% bandwidth requirement herein means that a span between a lowest PRB and a highest PRB accounts for 80% of the total bandwidth. 80% of the total bandwidth is occupied in the case of continuous occupancy of the frequency domain in FIG. 2, and therefore data of only one user can be transmitted in one slot. Based on the interlaced structure, the frequency domain continuous occupancy in FIG. 2 changes to discrete occupancy, such that 80% of the span is ensured without actually occupying 80% of the bandwidth.

One interlaced resource includes N discrete PRBs in the frequency domain, M interlaced resources are included in the frequency band range, and PRBs in an $m^{th}$ interlace are {m, M+m, 2M+m, 3M+m, ... }.

As shown in FIG. 5, the system bandwidth includes 20 PRBs (one PRB corresponds to 12 subcarriers) and five interlaces (that is, M=5). Each interlace includes four PRBs (that is, N=4). The frequency domain interval between any two adjacent PRBs in the interlace is uniform, that is, five PRBs. The numbers inside the boxes in FIG. 5 denote interlace indexes. It should be noted that the PRB in the interlace is also referred to as an IRB, and the interlace is also referred to as the IRB.

In addition to the IRB structure, the resource block (RB) set is also introduced in the SL-U.

The frequency domain resources on the carrier are organized into a plurality of RB sets, and guard frequency bands (guard bands for short) are configured or not configured between the RB sets. For example, an RB set corresponds to a frequency domain width of 20 MHz. The communication device needs to perform listen before talk (LBT) on the unlicensed spectrum, and the data is transmitted upon success of the LBT. The LBT is performed based on the granularity of one RB set, and thus one RB set is also referred to as an LBT sub-band. In a case where the communication device transmits data on the RB set, the LBT needs to be performed on the corresponding RB set, and the data is transmitted upon success of the LBT. One RB set includes a plurality of IRBs. For simplicity, in FIG. 6, one resource block actually corresponds to one IRB in FIG. 5. In general, a bandwidth part (BWP) configured for the communication device includes an integer number of RB sets.

In the SL-U, in one possible design, the resource pool contains an integer number of RB sets (and guard bands between the RB sets), and each RB set includes a plurality of IRBs. Furthermore, the concept of sub-channels in the resource pool continues to be used, that is, a sub-channel is defined as one or more IRBs, or, the terminal device transmits directly on one or more IRBs without using the sub-channel.

6. Classification of the LBT

In type 1, a random count value is generated. In the case that a monitoring slot is idle, 1 is subtracted from the random count value. In the case that a monitoring slot is active, no subtraction is performed for the random count value. In the case that the random count value is subtracted to 0, the channel is accessible and data transmission is allowed thereon. In the case that the random count value is subtracted to 0 and the communication device has no data to transmit, the random count value does not need to be generated again, and the LBT with a fixed duration only needs to be performed in the case that the communication device needs to transmit data. In the case that the LBT is successful, that is, the channel is idle within the fixed duration, the channel is accessed.

In Type 2A, the channel detection mode of the terminal device is 25 $\mu$s single-slot channel detection. Specifically, in Type2A channel access, the terminal device performs channel monitoring for 25 $\mu$s prior to the start of transmission, and transmits data upon success of the channel monitoring.

In Type 2B, the channel detection mode of the terminal device is 16 $\mu$s single-slot channel detection. Specifically, in Type2B channel access, the terminal device performs channel monitoring for 16 $\mu$s prior to the start of transmission, and transmits data upon success of the channel monitoring. The gap between the start position of the transmission and the end position of the previous transmission is 16 $\mu$s.

In Type 2C, the terminal device does not perform channel detection but transmits data upon the end of the gap. Specifically, in Type2C channel access, the terminal device transmits data directly. The gap between the start position of the transmission and the end position of the previous transmission is less than or equal to 16 $\mu$s. The length of the transmission is no longer than 584 $\mu$s.

7. Reevaluation and Preemption Mechanisms in NR V2X

Upon the resource selection, the NR-V2X also supports the reevaluation of the resources selected by not indicated by transmission of the first sidelink control information.

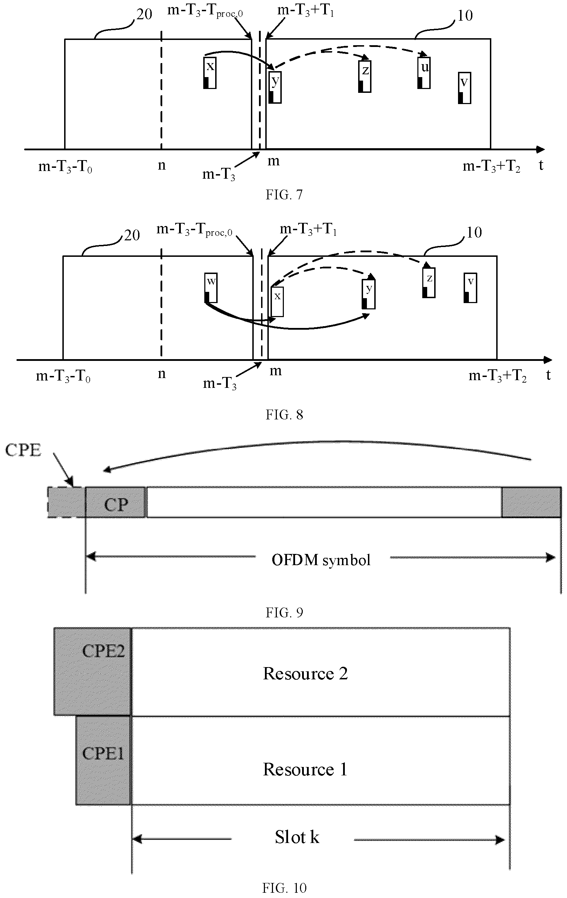

As shown in FIG. 7, resources x, y, z, u, and v are time-frequency resources that have been selected by the terminal device in slot n, and the resource y is located in slot m. For the resources z and u, which the terminal device is about to indicate for the first time by transmitting the first sidelink control information in the resource y (the resource y has been previously indicated in the first sidelink control information in the resource x), the terminal device performs step 1 described above at least once in slot $m-T_3$. That is, at least in slot $m-T_3$, the terminal device determines the resource selection window 10 and the resource sensing window 20 as described above, and performs step 1 to exclude resources within the resource selection window 10 to acquire a candidate resource set. In the case that the resources z and/or u are not in the candidate resource set, the terminal device performs step 2 to reselect the time-frequency resource from the resources z and u that is not in the candidate resource set. Depending on practice of the terminal device, the terminal device may also reselect any resource already selected but not indicated by transmission of the first sidelink control information, such as any one or more of the resources z, u, and v. $T_3$ is equal to $T_{proc,1}$. In FIG. 7, the dashed arrow indicates that the first sidelink control information indication is to be transmitted for indication, and the solid arrow indicates that the first sidelink control information indication has been transmitted for indication.

In addition, the NR-V2X also supports a resource preemption mechanism. In the NR-V2X, conclusions about the resource preemption mechanism are described from the perspective of a terminal whose selected resources are preempted. Upon resource selection, the terminal device continuously senses the first sidelink control information. In the case that a resource selected and indicated by transmission of the first sidelink control information meets the following three conditions, the resource has been preempted by another terminal device, and the terminal device triggers resource reselection for the resource:

1. The resource that have been selected and indicated by the terminal device is not in the candidate resource set.
2. The resource indicated in the sensed first sidelink control information is overlapped with the resource that have been selected and indicated by the terminal device, and the SL-RSRP of the PSCCH corresponding to the sensed first sidelink control information or the SL-RSRP of the PSSCH scheduled by the PSCCH is greater than the SL RSRP threshold.
3. The priority carried in the sensed first sidelink control information is higher than the priority of the data to be transmitted by the terminal device. Alternatively, the priority carried in the sensed first sidelink control information is higher than the priority of the data to be transmitted by the terminal device, and higher than the threshold U. U depends on the resource pool configuration, and the resource pool may be configured on the network or pre-configured.

As shown in FIG. 8, resources w, x, y, z, and v are time-frequency resources that have already been selected by the terminal device in slot n, and the resource x is located in slot m. For the resources x and y, which the terminal device is about to indicate by transmitting the first sidelink control information on resource x and have already been indicated in the first sidelink control information previously transmitted by the terminal device, the terminal device performs the step 1 at least once in slot $m-T_3$. That is, the terminal device determines the resource selection window 10 and the resource sensing window 20 at least in slot $m-T_3$ as described above, and performs the step 1 to exclude the available resources within the resource selection window 10 to determine a candidate resource set. In the case that the resources x and/or y meet the aforementioned three conditions, the terminal device performs step 2 to reselect the time-frequency resource from the resources x and y that meets the aforementioned three conditions. In addition, in the case that resource reselection is triggered, depending on the practice of the terminal device, the terminal device may reselect any resource already selected but not indicated by transmission of the first sidelink control information, such as any one or more of the resources z and v. $T_3$ is equal to $T_{proc,1}$.

8. CPE

In the NR-U system, because the 16 μs or 25 μs gap requirement needs to be satisfied in some channel access modes (for example, the LTB in Type 2B or 2C), the terminal device transmits the CPE to ensure the size of the gap between two transmissions. For example, as illustrated in FIG. 9, the cyclic prefix (CP) is duplication of a signal at the end of an orthogonal frequency division multiplexing (OFDM) symbol to the head of the OFDM symbol to reduce the inter-symbol interference in the OFDM system, and the CPE is an extension of the CP portion and is pre-transmitted prior to a symbol.

In an original SL system, a last symbol of a slot is a GP symbol, and an SL terminal does not perform transmission within the GP symbol. For example, a GP symbol is present between slot 1 and slot 2. The GP symbol is also present in the SL-U system, and a similar CPE transmission mechanism in the NR-U is introduced to the SL-U to avoid channel preemption by a heterogeneous system terminal, e.g., a wireless fidelity (WiFi) terminal. For example, the CPE is transmitted prior to an AGC symbol in slot 2 to avoid channel preemption of the SL-U terminal by a heterogeneous system user within the GP symbol in slot 1.

In view of the above, a CPE transmission mechanism is introduced to the SL-U system, that is, a CPE is transmitted prior to the AGC symbol (i.e., a slot) to occupy a channel. Moreover, a plurality of CPE transmission start points may be configured, that is, different SL-U terminals transmit CPEs from different start points. However, in a case where different SL-U terminals transmit CPEs from different start points, the SL-U terminals in the system interfere with channel accesses of other SL-U terminals, that is, the problem of inter-UE blocking occurs.

As illustrated in FIG. 10, resource 1 determined by UE 1 and resource 2 determined by UE 2 are both located in slot k, whereas the transmission start point of CPE 2 determined by UE 2 is earlier than the transmission start point of CPE 1 determined by UE 1. When UE 1 performs LBT prior to CPE 1 to prepare to access the channel for transmission, UE 1 monitors a busy channel, and cannot access the channel, that is, UE 1 cannot transmit data on resource 1.

To solve the above problem, in one aspect, by learning the ideas of the reevaluation and preemption mechanisms in NR SL, resource reselection is triggered in a case of inter-UE blocking in the present disclosure. In another aspect, the terminal device is capable of adjusting the length of the CPE based on the monitored sidelink control information, such that the lengths of the CPEs determined by the plurality of terminal devices are equal, and the inter-UE blocking is avoided.

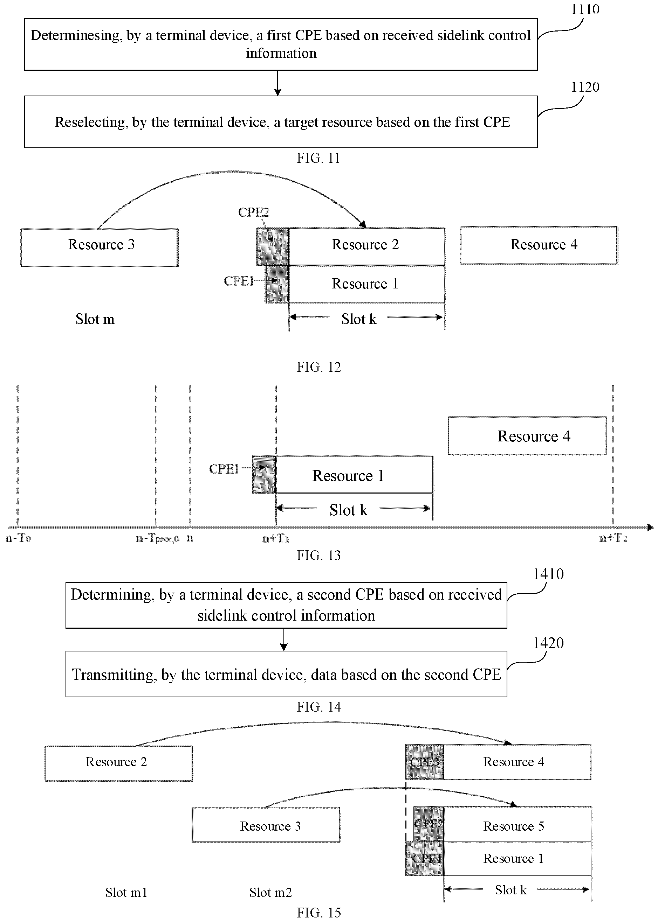

FIG. 11 is a flowchart of a method for resource reselection according to some embodiments of the present disclosure. The method is applicable to the network architecture illustrated in FIG. 1, and the method is performed by a terminal device. The method includes at least one of the following processes 1110 and 1120.

In process 1110, the terminal device determines a first CPE based on received sidelink control information.

In some embodiments, the sidelink control information is first sidelink control information or second sidelink control information scheduled by the first sidelink control information. The first sidelink control information is sidelink control information carried in a PSCCH and mainly includes fields related to resource monitoring. The second sidelink control information is sidelink control information carried in a PSSCH and mainly includes fields related to data demodulation. Exemplarily, the first sidelink control information indicates a resource transmitted over an SL, e.g., indicates a to-be-reserved resource. For details of the first sidelink control information and the second sidelink control information, reference may be made to the above descriptions.

In some embodiments, the first CPE is a CPE corresponding to the sidelink control information received by the terminal device.

In some embodiments, the terminal device determines the first CPE based on the priority indicated by the received sidelink control information. Exemplarily, the priority is a channel access priority or a data transmission priority. Exemplarily, the terminal device determines the first CPE from a first CPE set based on the priority indicated by the received sidelink control information, and the first CPE set includes at least one CPE. The first CPE set is configured by a network, preconfigured, or predefined in standards. In some embodiments, the first CPE set belongs to a resource pool configuration or a BWP configuration. Exemplarily, a corresponding relationship between the priorities and the CPEs in the first CPE set is configured in the resource pool configuration or BWP configuration of the terminal device, or is predefined in standards. The corresponding relationship is that one priority corresponds to one CPE or a plurality of priorities correspond to one CPE. The terminal device determines the first CPE from the first CPE set based on the priority indicated by the received sidelink control information. Exemplarily, the first CPE set being configured by the network, preconfigured, or predefined in standards means that the length of at least one CPE in the first CPE set is configured by the network, preconfigured, or predefined in standards.

In some embodiments, the terminal device determines the first CPE based on a first indication field in the received sidelink control information. Exemplarily, the first indication field at least indicates the first CPE. In some embodiment, the first indication field further indicates a channel access type. For example, the first indication field indicates the first CPE and the channel access type. Exemplarily, the channel access type is an LBT type. Exemplarily, the first indication field further indicates indexes of CPEs in the first CPE set, and the index indicated by the first indication field corresponds to the first CPE.

In process 1120, the terminal device reselects the target resource based on the first CPE.

In some embodiments, the target resource includes a resource that has been selected by the terminal device and/or a resource that has been indicated by the terminal device. Exemplarily, the resource that has been indicated by the terminal device means the resource indicated by the terminal device by transmitting the first sidelink control information.

In some embodiments, at least one target resource is configured.

In some embodiments, a target resource is reselected in a case where the any target resource satisfies a first condition. The first condition includes at least one of the following conditions 1.1 to 1.3.

Condition 1.1: the resource determined based on the received first sidelink control information overlaps with the resource corresponding to the target resource.

In some embodiments, the resource determined based on the received first sidelink control information is a resource indicated by the received first sidelink control information. Exemplarily, the indicated resource is a resource used for transmission of the same TB.

In some embodiments, the terminal device determines corresponding Q time units based on a time unit of the received first sidelink control information and a resource reservation period indicated by the first sidelink control information. Q is a positive integer. Assuming that the first sidelink control information with the same content is received in the Q time units, then the resource determined based on the received first sidelink control information is the resource indicated by the received and supposed to be received by the first sidelink control information. Exemplarily, the time unit at which the terminal device receives the first sidelink control information is denoted as a first time unit, and then the Q time units corresponding to the first time unit are Q time units with the resource reservation period indicated by the sidelink control information as an interval after the first time unit, with the first time unit as a start point. In addition, the time unit may be a slot, a subframe, or another time unit, which is not limited in the present disclosure. For the time unit mentioned elsewhere in the present disclosure, reference may be made to this explanation, which is not repeated any further.

In some embodiments, the resource corresponding to the target resource is a target resource.

In some embodiments, the resource corresponding to the target resource is a set of periodic resources with the resource reservation period of the terminal device as an interval, including the target resource.

In some embodiments, the above overlapping is an overlapping in a time domain.

In some embodiments, the resource determined based on the received first sidelink control information being overlapped with the resource corresponding to the target resource means that the resource determined based on the received first sidelink control information is overlapped with the resource corresponding to the target resource in the time domain in the same RB set. For the convenience of description, the resource determined based on the received first sidelink control information is denoted as resource 1, and the resource corresponding to the target resource is denoted as resource 2. Resource 1 being overlapped with resource 2 means that all or part of resource 1 and all or part of resource 2 are located in the same RB set and are overlapped in the time domain.

In some embodiments, the overlapping in the time domain means being located in the same slot in the time domain.

Condition 1.2: an RSRP of a PSCCH or PSSCH corresponding to received first sidelink control information is greater than or equal to a threshold.

In some embodiments, the PSCCH corresponding to the first sidelink control information is a PSCCH carrying the first sidelink control information, and the PSSCH corresponding to the first sidelink control information is a PSSCH scheduled by the PSCCH carrying the first sidelink control information. In other words, condition 1.2 is replaceable with a condition that the RSRP of the PSCCH carrying the received first sidelink control information or the PSSCH scheduled by the PSCCH is greater than or equal to the threshold.

Condition 1.3: the length of the first CPE is greater than the length of the CPE of the terminal device.

The length of the first CPE being greater than the length of the CPE of the terminal device may be understood as that the transmission start point of the first CPE is earlier than the transmission start point of the CPE of the terminal device. In other words, condition 1.3 is replaceable with a condition that the transmission start point of the first CPE is earlier than the transmission start point of the CPE of the terminal device.

Exemplarily, the transmission start point of the first CPE is determined based on a time domain start position of the transmission resource indicated by the received first sidelink control information and the length of the first CPE. For example, the transmission start point of the first CPE is acquired by subtracting the length of the first CPE from the time domain start position of the transmission resource. Exemplarily, the transmission start point of the CPE of the terminal device is determined based on the time domain start position of the target resource and the length of the CPE of the terminal device. For example, the transmission start point of the CPE of the terminal device is acquired by subtracting the length of the CPE of the terminal device from the time domain start position of the target resource. In some embodiments, the time domain start position of the transmission resource/target resource may be understood as the time domain start position of the first OFDM symbol of the time unit (e.g., a slot) occupied by the transmission resource/target resource or the time domain start position of the first AGC symbol of the time unit (e.g., a slot) occupied by the transmission resource/target resource.

In some embodiments, the CPE of the terminal device is a CPE used by the terminal device for data transmission.

In some embodiments, the first condition includes any one of conditions 1.1 to 1.3. Exemplarily, the first condition includes conditions 1.1 and 1.3. Exemplarily, the first condition includes conditions 1.1 and 1.2. Exemplarily, the first condition includes conditions 1.1, 1.2 and 1.3.

In some embodiments, the terminal device determines the first CPE based on the received sidelink control information, and triggers target resource reselection based on the first CPE at a first duration prior to the target resource. The first duration is demoted as $T_3$. Exemplarily, $T_3$ is equal to $T_{proc,1}$. In a case where a plurality of target resources are configured, the terminal device determines the first CPE based on the received sidelink control information, and reselects, based on the first CPE, the time domain position of the first target resource (i.e., a target resource with an earliest time domain position) in the plurality of target resources subtracted by $T_3$ as the trigger moment for the target resource. In some embodiments, the time domain position of the first target resource subtracted by $T_3$ is a time domain start position of the first target resource subtracted by $T_3$. In some embodiments, the first duration prior to the target resource or first target resource may be understood as a slot where the target resource or first target resource is located subtracted by $T_3$, and $T_3$ represents at least one slot.

As illustrated in FIG. 12, the target resource is resource 1 that has been selected by the terminal device, and the terminal device uses CPE 1 to occupy a channel prior to resource 1. The first sidelink control information received by the terminal device on resource 3 in slot m has indicated resource 2, resource 2 and resource 1 are located in the same RB set and are both located in slot k, and the length of CPE 2 corresponding to resource 2 determined based on the first sidelink control information received on resource 3 or based on the second sidelink control information scheduled by the first sidelink control information is greater than the length of CPE 1. Therefore, the terminal device reselects resource 1, for example, selects resource 4 to replace resource 1. In some embodiments, the terminal device triggers the above step of determining and reselecting the resource 1 at $k-T_3$.

In some embodiments, the terminal device determines a candidate resource set by performing resource exclusion based on the first CPE. In a case where any target resource does not belong to the candidate resource set, a target resource is reselected. Exemplarily, the above step is triggered at $T_3$ prior to the target resource. $T_3$ is equal to $T_{proc,1}$. In a case where a plurality of target resources are configured, the trigger moment is the time domain position of the first target resource in the plurality of target resources subtracted by $T_3$.

As illustrated in FIG. 13, the target resource is resource 1 that has been selected by the terminal device, and the terminal device uses CPE 1 to occupy a channel prior to resource 1. The terminal device determines a resource selection window from $n+T_1$ to $n+T_2$ and a resource monitoring window from $n-T_0$ to $n-T_{proc,0}$, determines the first CPE based on the sidelink control information monitored within the resource monitoring window, determines a candidate resource set by performing resource exclusion based on the first CPE. In a case where resource 1 is not in the candidate resource set, the terminal device reselects resource 1, for example, uses resource 4 to replace resource 1. n is equal to $k-T_3$.

In some embodiments, the terminal device initializes the candidate resource set. The candidate resource set includes at least one resource within the resource selection window. Exemplarily, the terminal device determines a resource selection window from $n+T_1$ to $n+T_2$, and determines slot n as a slot where a higher layer of the terminal device triggers a physical layer to report a candidate resource set. For $T_1$ and $T_2$, reference may be made to the above introduction. It is to be understood that slot n is a slot where the target resource or first target resource is located subtracted by $T_3$. The terminal device performs resource monitoring within the resource monitoring window from $n-T_0$ to $n-T_{proc,0}$, or the terminal device monitors the sidelink control information within $n-T_0$ to $n-T_{proc,0}$. For $T_0$ and $T_{proc,0}$, reference may be made to the above introduction. The candidate resource set is denoted as a resource set A. The terminal device initializes the resource set A, and the resource set A includes candidate resources within the resource selection window. Exemplarily, any candidate resource is denoted as R(x,y). x indicates a frequency domain position of the candidate resource, and y indicates a time domain position of the candidate resource. In some embodiment, x indicates a frequency domain start position of the candidate resource. In some embodiments, the candidate resource corresponds to U contiguous subchannels or IRBs in a frequency domain. Exemplarily, the subchannel includes one or more contiguous IRBs. Exemplarily, the U contiguous subchannels or IRBs are located in the same RB set. U is configured by a network, preconfigured, configured by a higher layer of the terminal device for the physical layer, implemented by the terminal device, or a preset value specified in standards. The number of available resources in the initial resource set A is denoted as $M_{total}$.

The terminal device excludes a first resource in the candidate resource set in a case where the first resource satisfies a second condition. The first resource is any candidate resource as described above, which is denoted as R(x,y). The second condition includes at least one of the following conditions 2.1 to 2.3.

Condition 2.1: the resource determined based on the received first sidelink control information overlaps with the resource corresponding to the first resource.

In some embodiments, the resource determined based on the received first sidelink control information is a resource indicated by the received first sidelink control information. Exemplarily, the indicated resource is a resource used for transmission of the same TB.

In some embodiments, the terminal device determines corresponding Q time units based on the time unit of the received first sidelink control information and the resource reservation period indicated by the first sidelink control information. Q is a positive integer. Assuming that the first sidelink control information with the same content is received in the Q time units, then the resource determined based on the received first sidelink control information is the resource indicated by the received and supposed to be by the received first sidelink control information. Exemplarily, the time unit at which the terminal device receives the first sidelink control information is denoted as a first time unit, and then the Q time units corresponding to the first time unit are Q time units with the resource reservation period indicated by the sidelink control information as an interval after the first time unit, with the first time unit as a start point.

In some embodiments, the resource corresponding to the first resource is a first resource.

In some embodiments, the resource corresponding to the first resource is a set of periodic resources with the resource reservation period of the terminal device as an interval, including the first resource.

In some embodiments, the above overlapping is an overlapping in a time domain.

In some embodiments, the resource determined based on the received first sidelink control information being overlapped with the resource corresponding to the first resource means that the resource determined based on the received first sidelink control information is overlapped with the resource corresponding to the first resource in the time domain in the same RB set. For the convenience of description, the resource determined based on the received first sidelink control information is denoted as resource 1, the resource corresponding to the first resource is denoted as resource 3, and resource 1 being overlapped with resource 3 means that all or part of resource 1 and all or part of resource 3 are located in the same RB set and are overlapped in the time domain.

In some embodiments, the overlapping in the time domain means being located in the same slot in the time domain.

Condition 2.2: the RSRP of a PSCCH or PSSCH corresponding to received first sidelink control information is greater than or equal to a threshold.

In some embodiments, the PSCCH corresponding to the first sidelink control information is a PSCCH carrying the first sidelink control information, and the PSSCH corresponding to the first sidelink control information is a PSSCH scheduled by the PSCCH carrying the first sidelink control information. In other words, condition 2.2 is replaceable with a condition that the RSRP of the PSCCH carrying the received first sidelink control information or the PSSCH scheduled by the PSCCH is greater than or equal to the threshold.

Condition 2.3: the length of the first CPE is greater than the length of the CPE of the terminal device.

The length of the first CPE being greater than the length of the CPE of the terminal device may be understood as that the transmission start point of the first CPE is earlier than the transmission start point of the CPE of the terminal device. In other words, condition 2.3 is replaceable with a condition that the transmission start point of the first CPE is earlier than the transmission start point of the CPE of the terminal device.

In some embodiments, the CPE of the terminal device is a CPE used by the terminal device for data transmission.

In some embodiments, the second condition includes any one of conditions 2.1 to 2.3. Exemplarily, the second condition includes conditions 2.1 and 2.3. Exemplarily, the second condition includes conditions 21 and 2.2. Exemplarily, the second condition includes conditions 2.1, 2.2 and 2.3.

Exemplarily, after initializing the resource set A, the terminal device performs resource exclusion on the resources in the resource set A based on the second condition, and the resource set A upon the resource exclusion is a final candidate resource set.

In some embodiments, in a case where the number of remaining resources in the resource set A upon the resource exclusion reaches $M_{total}*X$, the resource set A upon the resource exclusion is determined as the final candidate resource set. In some embodiments, in a case where the number of remaining resources in the resource set A upon the resource exclusion does not reach $M_{total}*X$, the above threshold (i.e., the SL-RSRP threshold) is increased by a value (such as 3dB), and the resource exclusion is performed again on the resources in the initial resource set A based on the second condition.

In some embodiments, to reselect the target resource in the above embodiments is to reselect the target resource from the candidate resource set acquired upon the above resource exclusion.

In the technical solution according to the embodiments of the present disclosure, the terminal device can determine the corresponding CPE based on the received sidelink control information, and triggers resource reselection in a case where inter-UE blocking is determined, based on the determined CPE, to occur. In this way, the inter-UE blocking is avoided, and the success rate of accessing channels by the terminal devices in the SL-U system is increased.

FIG. 14 is a flowchart of a method for data transmission according to some embodiments of the present disclosure. The method is applicable to the network architecture illustrated in FIG. 1, and the method is performed by a terminal device. The method includes at least one of the following processes 1410 and 1420.

In process 1410, the terminal device determines a second CPE based on received sidelink control information.

In process 1420, the terminal device transmits data based on the second CPE.

In some embodiments, the sidelink control information is first sidelink control information or second sidelink control information scheduled by the first sidelink control information. The first sidelink control information is sidelink control information carried in a PSCCH and mainly includes fields related to resource monitoring. The second sidelink control information is sidelink control information carried in a PSSCH and mainly includes fields related to data demodulation. Exemplarily, the first sidelink control information indicates a resource transmitted over an SL, e.g., indicates a to-be-reserved resource. For details of the first sidelink control information and the second sidelink control information, reference may be made to the above descriptions.

In some embodiments, a resource indicated by the first sidelink control information overlaps with a resource required for data transmission of the terminal device. In some embodiments, the above overlapping is an overlapping in the time domain. In some embodiments, the resource indicated by the first sidelink control information being overlapped with the resource required for data transmission of the terminal device means that the resource indicated by the first sidelink control information is overlapped with the resource required for data transmission of the terminal device in the time domain in the same RB set. For the convenience of description, the resource indicated by the first sidelink control information is denoted as resource a, the resource required for data transmission of the terminal device is denoted as resource b, and resource a being overlapped with resource b means that all or part of resource a and all or part of resource b are located in the same RB set and are overlapped in the time domain. In some embodiments, the overlapping in the time domain means being located in the same slot.

In some embodiments, the resource indicated by the first sidelink control information is used for transmission of a TB.

In some embodiments, the terminal device determines the second CPE based on at least one piece of received sidelink control information, and transmits data based on the second CPE. Exemplarily, the at least one piece of sidelink control information is all sidelink control information that satisfies the overlapping condition in the time domain.

In some embodiments, the terminal device determines, based on at least one piece of received sidelink control information, first CPE(s) respectively corresponding to the at least one piece of sidelink control information, and determines the second CPE based on the first CPE(s) respectively corresponding to the at least one piece of sidelink control information.

In some embodiments, the terminal device determines the first CPE(s) respectively corresponding to the at least one piece of sidelink control information based on priority(ies) respectively indicated by the at least one piece of sidelink control information. Exemplarily, the priority is a channel access priority or a data transmission priority. Exemplarily, the terminal device determines, based on the priority(ies) respectively indicated by the at least one piece of sidelink control information, the first CPE(s) respectively corresponding to the at least one piece of sidelink control information from a first CPE set. The first CPE set includes at least one CPE. The first CPE set is configured by a network, preconfigured, or specified in standards. In some embodiments, the first CPE set belongs to a resource pool configuration or a BWP configuration. Exemplarily, a corresponding relationship between the priorities and the CPEs in the first CPE set is configured in the resource pool configuration or BWP configuration of the terminal device, or is predefined in standards. The corresponding relationship is that one priority corresponds to one CPE or a plurality of priorities correspond to one CPE. The terminal device determines the first CPE from the first CPE set based on the priority indicated by the received sidelink control information. Exemplarily, the first CPE set being configured by the network, preconfigured, or predefined in standards may be understood as that the length of at least one CPE in the first CPE set is configured by the network, preconfigured, or predefined in standards.

In some embodiments, the terminal device determines the first CPE(s) respectively corresponding to the at least one piece of sidelink control information based on first indication field(s) in the at least one piece of sidelink control information. The first indication field at least indicates the first CPE. In some embodiment, the first indication field further indicates a channel access type. For example, the first indication field indicates the first CPE and the channel access type. Exemplarily, the channel access type is an LBT type. Exemplarily, the first indication field further indicates indexes of CPEs in the first CPE set, and the index indicated by the first indication field corresponds to the first CPE.

In some embodiments, the terminal device determines a CPE with a maximum length in the first CPE(s) respectively corresponding to the at least one piece of sidelink control information as the second CPE. That is, the terminal device determines a CPE with an earliest transmission start point in the first CPE(s) respectively corresponding to the at least one piece of sidelink control information as the second CPE.

In some embodiments, the terminal device determines a CPE with a maximum length in the CPE of the terminal device and the first CPE(s) respectively corresponding to the at least one piece of sidelink control information as the second CPE. That is, the terminal device determines a CPE with an earliest transmission start point in the CPE of the terminal device and the first CPE(s) respectively corresponding to the at least one piece of sidelink control information as the second CPE. The CPE of the terminal device is a CPE of the terminal device for data transmission. In determining the second CPE, the terminal device compares the length of the CPE of the terminal device with the length(s) of the first CPE(s) respectively corresponding to the at least one piece of sidelink control information, and continues to use the CPE of the terminal device, without any adjustment, in a case where the length of the CPE of the terminal device is the largest.

In some embodiments, in a case where the terminal device has determined the CPE of the terminal device before determining the first CPE(s) respectively corresponding to the at least one piece of sidelink control information, the terminal device determines a CPE with a maximum length in the CPE of the terminal device and the first CPE(s) respectively corresponding to the at least one piece of sidelink control information as the second CPE. In a case where the terminal device has not determined the CPE of the terminal device before determining the first CPE(s) respectively corresponding to the at least one piece of sidelink control information, the terminal device determines a CPE with a maximum length in the first CPE(s) respectively corresponding to the at least one piece of sidelink control information as the second CPE.

In some embodiments, the terminal device determines, based on at least one piece of received sidelink control information, priority(ies) respectively indicated by the at least one piece of sidelink control information, and determines the second CPE based on the priority(ies) respectively indicated by the at least one piece of sidelink control information.

In some embodiments, the terminal device determines a CPE corresponding to a highest priority in the priority(ies) respectively indicated by the at least one piece of sidelink control information as the second CPE.

In some embodiments, the terminal device determines a CPE corresponding to the highest priority in the priority used by the terminal device and the priority(ies) respectively indicated by the at least one piece of sidelink control information as the second CPE. The priority used by the terminal device is a priority used by the terminal device for data transmission or a channel access priority. When determining the second CPE, the terminal device compares the priority used by the terminal device with the priority(ies) respectively indicated by the at least one piece of sidelink control information, and continues to use the CPE corresponding to the priority used by the terminal device, without any adjustment, in a case where the priority used by the terminal device is the highest.

In some embodiments, in a case where the terminal device has determined the priority used by the terminal device before determining the priority(ies) respectively indicated by the at least one piece of sidelink control information, the terminal device determines the CPE corresponding to a highest priority in the priority used by the terminal device and the priority(ies) respectively indicated by the at least one piece of sidelink control information as the second CPE. In a case where the terminal device has not determined the priority used by the terminal device before determining the priority(ies) respectively indicated by the at least one piece of sidelink control information, the terminal device determines the CPE corresponding to the highest priority in the priority(ies) respectively indicated by the at least one piece of sidelink control information as the second CPE.

It should be noted that the priority may be represented by a priority value. In some embodiments, the smaller the priority value, the higher the priority; and the larger the priority value, the lower the priority. In some embodiments, the larger the priority value, the higher the priority; and the smaller the priority value, the lower the priority, which are not limited in the present disclosure.

In some embodiments, the moment when the terminal device determines the second CPE is prior to the data transmission and/or after a first duration prior to the data transmission. The first duration is denoted as $T_3$. Exemplarily, $T_3$ is equal to $T_{proc,1}$.

As illustrated in FIG. 15, resource 1 is a resource that has been selected by the terminal device, and the terminal device determines the length of the CPE prior to slot k where the resource 1 is located and after $k-T_3$ to occupy a channel. The terminal device receives resource 4 and resource 5 indicated by the first sidelink control information on resource 2 in slot m1 and on resource 3 in slot m2, respectively. Resources 4 and 5 are located in slot k, and resources 1, 4 and 5 are located in the same RB set.

In some embodiments, the first sidelink control information received on resource 2 or the second sidelink control information scheduled by the first sidelink control information indicates CPE 3, the first sidelink control information received on resource 3 or the second sidelink control information scheduled by the first sidelink control information indicates CPE 2, and the length of CPE 3 is greater than the length of CPE 2, that is, the transmission start point corresponding to CPE 3 is prior to the transmission start point corresponding to CPE 2. Therefore, the lengths of CPE1 and CPE 3 determined by the terminal device are equal.

In some embodiments, the first sidelink control information received on resource 2 or the second sidelink control information scheduled by the first sidelink control information indicates CPE 3, and the first sidelink control information received on resource 3 or the second sidelink control information scheduled by the first sidelink control information indicates CPE 2. The CPE determined by the terminal device is CPE 1, and the length of CPE 3 is greater than the length of CPE 2 and the length of CPE 1, that is, or the transmission start point corresponding to CPE 3 is prior to the transmission start point corresponding to CPE 2 and the transmission start point corresponding to CPE 1. Therefore, the terminal device adjusts the lengths of CPE1 and CPE 3 to be equal.

In some embodiments, the first sidelink control information received on resource 2 or the second sidelink control information scheduled by the first sidelink control information indicates a channel access priority p1, the first sidelink control information received on resource 3 or the second sidelink control information scheduled by the first sidelink control information indicates a channel access priority p2, and p1 is less than p2, that is, the priority pl is higher. Therefore, the lengths of CPE1 and CPE 3 determined by the terminal device are equal.

In some embodiments, the first sidelink control information received on resource 2 or the second sidelink control information scheduled by the first sidelink control information indicates a channel access priority p1, and the first sidelink control information received on resource 3 or the second sidelink control information scheduled by the first sidelink control information indicates a channel access priority p2. The channel access priority used by the terminal device is p3, and the priority value of pl is the lowest, that is, the priority pl is higher. Therefore, the terminal device determines the lengths of CPE1 and CPE 3 to be equal, or the terminal device adjusts CPE 1 and the CPE 3 to be equal in a case where the terminal device has determined CPE 1 based on p3.

The terminal device transmits data on resource 1, and pre-transmits CPE 1 to occupy a channel.

In the technical solution according to the embodiments of the present disclosure, the terminal device can determine, based on the received sidelink control information, the length of the CPE of the terminal device used for transmission to ensure that the CPEs of a plurality of terminal devices transmitted in the same time unit have an equal length. In this way, inter-UE blocking is avoided, and the success rate of accessing channels by the terminal devices in the SL-U system is increased.

The following is apparatus embodiments of the present disclosure, which may be used to implement the method embodiments of the present disclosure. For details not disclosed in the apparatus embodiments of the present disclosure, reference may be made to the method embodiments of the present disclosure.

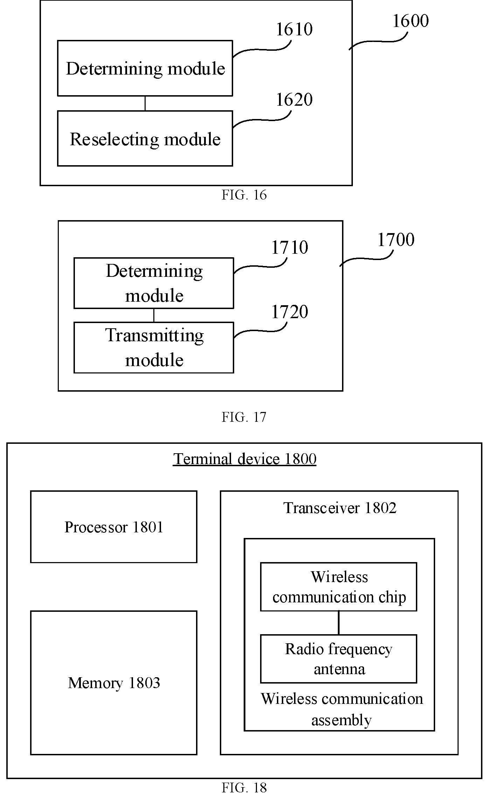

FIG. 16 illustrates a block diagram of an apparatus for resource reselection according to some embodiments of the present disclosure. The apparatus has the function of implementing the above method embodiments for resource reselection. The function may be implemented by hardware or implemented by software executed by relevant hardware. The apparatus may be the terminal device described above or may be provided in the terminal device. As illustrated in FIG. 16, the apparatus 1600 includes a determining module 1610 and a reselecting module 1620.

The determining module 1610 is configured to determine a first CPE based on received sidelink control information.

The reselecting module 1620 is configured to reselect a target resource based on the first CPE.

In some embodiments, the determining module 1610 is configured to determine the first CPE based on a priority indicated by the received sidelink control information.

In some embodiments, the determining module 1610 is configured to determine the first CPE from a first CPE set based on the priority indicated by the received sidelink control information, wherein the first CPE set includes at least one CPE.

In some embodiments, the first CPE set belongs to a resource pool configuration or a BWP configuration.

In some embodiments, the priority is a channel access priority or a data transmission priority.

In some embodiments, the determining module 1610 is configured to determine the first CPE based on a first indication field in the received sidelink control information, wherein the first indication field at least indicates the first CPE.

In some embodiments, the first indication field further indicates a channel access type.

In some embodiments, the reselecting module 1620 is configured to reselect the target resource in a case where the target resource satisfies a first condition. The first condition comprises at least one of: a resource determined based on received first sidelink control information being overlapped with a resource corresponding to the target resource; an RSRP of a PSCCH or PSSCH corresponding to received first sidelink control information being greater than or equal to a threshold; or a length of the first CPE being greater than a length of a CPE of a terminal device.

In some embodiments, the resource determined based on the received first sidelink control information being overlapped with the resource corresponding to the target resource means that the resource determined based on the received first sidelink control information is overlapped with the resource corresponding to the target resource in a time domain in a same resource block set.

In some embodiments, the apparatus further includes an excluding module (not illustrated in FIG. 16), configured to determine a candidate resource set by performing resource exclusion based on the first CPE.

The reselecting module 1620 is configured to reselect the target resource in a case where the target resource does not belong to the candidate resource set.

In some embodiments, the excluding module is configured to initialize a candidate resource set, wherein the candidate resource set includes at least one resource within a resource selection window; and exclude a first resource in the candidate resource set in a case where the first resource satisfies a second condition; wherein the second condition includes at least one of: a resource determined based on received first sidelink control information being overlapped with a resource corresponding to the first resource; an RSRP of a PSCCH or PSSCH corresponding to received first sidelink control information being greater than or equal to a threshold; or a length of the first CPE being greater than a length of a CPE of a terminal device.

In some embodiments, the resource determined based on the received first sidelink control information being overlapped with the resource corresponding to the first resource means that the resource determined based on the received first sidelink control information is overlapped with the resource corresponding to the first resource in a time domain in a same resource block set.

In some embodiments, the target resource includes a resource that has been selected by a terminal device and/or a resource that has been indicated by a terminal device.

In some embodiments, at least one target resource is configured.

In some embodiments, the sidelink control information is first sidelink control information or second sidelink control information scheduled by the first sidelink control information.

FIG. 17 illustrates a block diagram of an apparatus for data transmission according to some embodiments of the present disclosure. The apparatus has the function of implementing the above method embodiments for data transmission. The function may be implemented by hardware or implemented by software executed by relevant hardware. The apparatus may be the terminal device described above or may be provided in the terminal device. As illustrated in FIG. 17, the apparatus 1700 includes a determining module 1710 and a transmitting module 1720.

The determining module 1710 is configured to determine a second CPE based on received sidelink control information.

The transmitting module 1720 is configured to transmit data based on the second CPE.

In some embodiments, the determining module 1710 is configured to: determine, based on at least one piece of received sidelink control information, a first CPE corresponding to each of the at least one piece of sidelink control information; and determine the second CPE based on the first CPE corresponding to the each of the at least one piece of sidelink control information.

In some embodiments, the determining module 1710 is configured to determine the first corresponding to the each of the at least one piece of sidelink control information based on a priority indicated by the each of the at least one piece of sidelink control information.

In some embodiments, the determining module 1710 is configured to determine the first CPE corresponding to the at least one piece of sidelink control information from a first CPE set based on the priority indicated by the each of the at least one piece of sidelink control information, wherein the first CPE set includes at least one CPE.

In some embodiments, the first CPE set belongs to a resource pool configuration or a BWP configuration.

In some embodiments, the priority is a channel access priority or a data transmission priority.

In some embodiments, the determining module 1710 is configured to determine the first CPE corresponding to the each of the at least one piece of sidelink control information based on a first indication field in each of the at least one piece of sidelink control information, wherein the first indication field at least indicates the first CPE.

In some embodiments, the first indication field further indicates a channel access type.

In some embodiments, the determining module 1710 is configured to: determine a CPE with a maximum length in the first CPE corresponding to the each of the at least one piece of sidelink control information as the second CPE; or determine a CPE with a maximum length in a CPE of a terminal device and the first CPE corresponding to the each of the at least one piece of sidelink control information as the second CPE.

In some embodiments, the determining module 1710 is configured to: determine, based on at least one piece of received sidelink control information, a priority indicated by the each of the at least one piece of sidelink control information; and determine the second CPE based on the priority indicated by the each of the at least one piece of sidelink control information.

In some embodiments, the determining module 1710 is configured to: determine a CPE corresponding to a highest priority in the priority indicated by the each of the at least one piece of sidelink control information as the second CPE; or determine a CPE corresponding to a highest priority in a priority used by a terminal device and the priority indicated by the each of the at least one piece of sidelink control information as the second CPE.

In some embodiments, the sidelink control information is first sidelink control information or second sidelink control information scheduled by the first sidelink control information.

In some embodiments, a resource indicated by the first sidelink control information overlaps with a resource used for data transmission of a terminal device.

In some embodiments, the resource indicated by the first sidelink control information being overlapped with the resource used for data transmission of the terminal device means that the resource indicated by the first sidelink control information is overlapped with the resource used for data transmission of the terminal device in a time domain in a same resource block set.

In some embodiments, a moment when a terminal device determines the second CPE is prior to the data transmission and/or after a first duration prior to the data transmission.

It should be noted that, in the case that the apparatus according to the above embodiments implements the functions thereof, the division of the functional modules is merely exemplary. In practice, the above functions may be assigned to and completed by different functional modules according to actual needs, that is, the internal structure of the apparatus may be divided into different functional modules, to implement all or a part of the above functions.

With regard to the apparatus in the above embodiments, the specific manner in which each module performs the operation has been described in detail in the embodiments related to the method and will not be described in detail herein. Reference may be made to the above method embodiments for details that are not specified in the apparatus embodiment.

FIG. 18 illustrates a schematic structural diagram of a terminal device according to some embodiments of the present disclosure. The terminal device 1800 includes: a processor 1801, a transceiver 1802, and a memory 1803.

The processor 1801 includes one or more processing cores, and the processor 1801 runs various functional applications and performs information processing by running software programs and modules.

The transceiver 1802 includes a receiver and a transmitter, which are practiced, for example, as the same wireless communication assembly that includes a wireless communication chip and a radio frequency antenna.

The memory 1803 is connected to the processor 1801 and the transceiver 1802.

The memory 1803 may be configured to store one or more computer programs run by the processor, and the processor 1801 is configured to run the one or more computer programs to perform the processes in the above method embodiments.

In some embodiments, the processor 1801 is configured to: determine a first CPE based on received sidelink control information; and reselect a target resource based on the first CPE.

In some embodiments, the processor 1801 is configured to: determine a second CPE based on received sidelink control information; and transmit data based on the second CPE.

For details not specified in the embodiments, reference is made to the foregoing embodiments, which are not repeated herein.

In addition, the memory may be implemented by any type or combination of volatile or non-volatile storage devices, including, but not limited to: a magnetic or optical disc, an electrically erasable programmable read-only memory, an erasable programmable read-only memory, a static random-access memory, a read-only memory (ROM), a magnetic memory, a flash memory, and a programmable read-only memory.

The embodiments of the present disclosure further provide a computer-readable storage medium storing one or more computer programs therein. The one or more computer programs, when loaded and run by a processor, cause the processor to perform the method for resource reselection described above or the method for data transmission described above. In some embodiments, the computer-readable storage medium includes: a ROM, a random-access memory (RAM), a solid state drive (SSD), an optical disk, etc. The RAM includes a resistance random-access memory (ReRAM) and a dynamic random access memory (DRAM).

The embodiments of the present disclosure further provide a chip including one or more programmable logic circuits and/or one or more program instructions. The chip, when running, is caused to perform the method for resource reselection described above or the method for data transmission described above.

The embodiments of the present disclosure further provide a computer program product. The computer program product includes at least one computer instruction stored in a computer-readable storage medium. The at least one computer instruction, when read from the computer-readable storage medium and executed by a processor, causes the processor to perform the method for resource reselection described above or the method for data transmission described above.

It should be understood that the term "indication" mentioned in the embodiments of the present disclosure is a direct indication, an indirect indication, or an indication that there is an association relationship. For example, A indicates B, which may mean that A indicates B directly, e.g., B may be acquired by A; or that A indicates B indirectly, e.g., A indicates C by which B may be acquired; or that an association relationship is present between A and B.

In the description of the embodiments of the present disclosure, the term "correspond" indicates a direct or indirect corresponding relationship between two items, or indicates an associated relationship between the two items; and also indicates relationships such as indicating and being indicated, or configuring and being configured.

In some embodiments of the present disclosure, the term "predefined" is implemented by pre-storing corresponding codes, tables, or other means that may be defined to indicate related information in devices (including, for example, terminal devices and network devices), and the present disclosure does not limit the specific implementation thereof. For example, "predefined" refers to "defined" in a protocol.

In some embodiments of the present disclosure, the "protocol" refers to a standard protocol in the communication field including, for example, the LTE protocol, the NR protocol, and related protocols applied in future communication systems, which is not limited in the present disclosure.

The mentioned term "a plurality of" herein means two or more. The term "and/or" describes the association relationship between the associated objects, and indicates that three relationships may be present. For example, the phrase "A and/or B" means (A), (B), or (A and B). The symbol "/" generally indicates an "or" relationship between the associated objects.

Reference herein to "greater than or equal to" may indicate greater than or equal to or just greater than, and "less than or equal to" may indicate less than or equal to or just less than.

In addition, serial numbers of the processes described herein only show an exemplary possible sequence of performing the processes. In some other embodiments, the processes may also be performed out of the numbering sequence, for example, two processes with different serial numbers are performed simultaneously, or two processes with different serial numbers are performed in a reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

**Claims**

1. A method for resource reselection, performed by a terminal device, the method comprising:

    determining a first cyclic prefix extension (CPE) based on received sidelink control information; and
    reselecting a target resource based on the first CPE.

2. The method according to claim 1, wherein determining the first CPE based on the received sidelink control information comprises:
   determining the first CPE based on a priority indicated by the received sidelink control information.

3. The method according to claim 2, wherein determining the first CPE based on the priority indicated by the received sidelink control information comprises:
   determining the first CPE from a first CPE set based on the priority indicated by the received sidelink control information, wherein the first CPE set comprises at least one CPE.

4. The method according to claim 3, wherein the first CPE set belongs to a resource pool configuration or a bandwidth part (BWP) configuration.

5. The method according to any one of claims 2 to 4, wherein the priority is a channel access priority or a data transmission priority.

6. The method according to claim 1, wherein determining the first CPE based on the received sidelink control information comprises:
determining the first CPE based on a first indication field in the received sidelink control information, wherein the first indication field at least indicates the first CPE.

7. The method according to claim 6, wherein the first indication field further indicates a channel access type.

8. The method according to any one of claims 1 to 7, wherein reselecting the target resource based on the first CPE comprises:

reselecting the target resource in a case where the target resource satisfies a first condition;
wherein the first condition comprises at least one of:

a resource determined based on received first sidelink control information being overlapped with a resource corresponding to the target resource;
a reference signal received power (RSRP) of a physical sidelink control channel (PSCCH) or physical sidelink shared channel (PSSCH) corresponding to received first sidelink control information being greater than or equal to a threshold; or
a length of the first CPE being greater than a length of a CPE of the terminal device.

9. The method according to claim 8, wherein the resource determined based on the received first sidelink control information being overlapped with the resource corresponding to the target resource means that the resource determined based on the received first sidelink control information is overlapped with the resource corresponding to the target resource in a time domain in a same resource block set.

10. The method according to any one of claims 1 to 7, wherein reselecting the target resource based on the first CPE comprises:

determining a candidate resource set by performing resource exclusion based on the first CPE; and
reselecting the target resource in a case where the target resource does not belong to the candidate resource set.

11. The method according to claim 10, wherein determining the candidate resource set by performing resource exclusion based on the first CPE comprises:

initializing a candidate resource set, wherein the candidate resource set comprises at least one resource within a resource selection window; and
excluding a first resource in the candidate resource set in a case where the first resource satisfies a second condition;
wherein the second condition comprises at least one of:

a resource determined based on received first sidelink control information being overlapped with a resource corresponding to the first resource;
a reference signal received power (RSRP) of a physical sidelink control channel (PSCCH) or physical sidelink shared channel (PSSCH) corresponding to received first sidelink control information being greater than or equal to a threshold; or
a length of the first CPE being greater than a length of a CPE of the terminal device.

12. The method according to claim 11, wherein the resource determined based on the received first sidelink control information being overlapped with the resource corresponding to the first resource means that the resource determined based on the received first sidelink control information is overlapped with the resource corresponding to the first resource in a time domain in a same resource block set.

13. The method according to any one of claims 1 to 12, wherein the target resource comprises a resource that has been selected by the terminal device and/or a resource that has been indicated by the terminal device.

14. The method according to any one of claims 1 to 13, wherein at least one target resource is configured.

15. The method according to any one of claims 1 to 14, wherein the sidelink control information is first sidelink control information or second sidelink control information scheduled by the first sidelink control information.

16. A method for data transmission, performed by a terminal device, the method comprising:

   determining a second cyclic prefix extension (CPE) based on received sidelink control information; and
   transmitting data based on the second CPE.

17. The method according to claim 16, wherein determining the second CPE based on the received sidelink control information comprises:

   determining, based on at least one piece of received sidelink control information, a first CPE corresponding to each of the at least one piece of sidelink control information; and
   determining the second CPE based on the first CPE corresponding to the each of the at least one piece of sidelink control information.

18. The method according to claim 17, wherein determining, based on the at least one piece of received sidelink control information, the first CPE corresponding to the each of the at least one piece of sidelink control information comprises:
   determining the first CPE corresponding to the each of the at least one piece of sidelink control information based on a priority indicated by the each of the at least one piece of sidelink control information.

19. The method according to claim 18, wherein determining the first CPE corresponding to the each of the at least one piece of sidelink control information based on the priority indicated by the each of the at least one piece of sidelink control information comprises:
   determining the first CPE corresponding to the at least one piece of sidelink control information from a first CPE set based on the priority indicated by the each of the at least one piece of sidelink control information, wherein the first CPE set comprises at least one CPE.

20. The method according to claim 19, wherein the first CPE set belongs to a resource pool configuration or a bandwidth part (BWP) configuration.

21. The method according to any one of claims 18 to 20, wherein the priority is a channel access priority or a data transmission priority.

22. The method according to claim 17, wherein determining, based on the each of the at least one piece of received sidelink control information, the first CPE corresponding to the each of the at least one piece of sidelink control information comprises:
   determining the first CPE corresponding to the each of the at least one piece of sidelink control information based on a first indication field in the each of the at least one piece of sidelink control information, wherein the first indication field at least indicates the first CPE.

23. The method according to claim 22, wherein the first indication field further indicates a channel access type.

24. The method according to any one of claims 17 to 23, wherein determining the second CPE based on the first CPE corresponding to the each of the at least one piece of sidelink control information comprises:

   determining a CPE with a maximum length in the first CPE corresponding to the each of the at least one piece of sidelink control information as the second CPE; or
   determining a CPE with a maximum length in a CPE of the terminal device and the first CPE corresponding to the each of the at least one piece of sidelink control information as the second CPE.

25. The method according to claim 16, wherein determining the second CPE based on the received sidelink control information comprises:

determining, based on at least one piece of received sidelink control information, a priority indicated by the each of the at least one piece of sidelink control information; and

determining the second CPE based on the priority indicated by the each of the at least one piece of sidelink control information.

26. The method according to claim 25, wherein determining the second CPE based on the priority indicated by the each of the at least one piece of sidelink control information comprises:

determining a CPE corresponding to a highest priority in the priority indicated by the each of the at least one piece of sidelink control information as the second CPE; or

determining a CPE corresponding to a highest priority in a priority used by the terminal device and the priority indicated by the each of the at least one piece of sidelink control information as the second CPE.

27. The method according to claims 16 to 26, wherein the sidelink control information is first sidelink control information or second sidelink control information scheduled by the first sidelink control information.

28. The method according to claim 27, wherein a resource indicated by the first sidelink control information overlaps with a resource used for data transmission of the terminal device.

29. The method according to claim 28, wherein the resource indicated by the first sidelink control information being overlapped with the resource used for data transmission of the terminal device means that the resource indicated by the first sidelink control information and the resource used for data transmission of the terminal device is overlapped with in a time domain in a same resource block set.

30. The method according to any one of claims 16 to 29, wherein a moment when the terminal device determines the second CPE is prior to the data transmission and/or after a first duration prior to the data transmission.

31. An apparatus for resource reselection, comprising:

a determining module, configured to determine a first cyclic prefix extension (CPE) based on received sidelink control information; and

a reselecting module, configured to reselect a target resource based on the first CPE.

32. The apparatus according to claim 31, wherein the determining module is configured to:
determine the first CPE based on a priority indicated by the received sidelink control information.

33. The apparatus according to claim 32, wherein the determining module is configured to:
determine the first CPE from a first CPE set based on the priority indicated by the received sidelink control information, wherein the first CPE set comprises at least one CPE.

34. The apparatus according to claim 33, wherein the first CPE set belongs to a resource pool configuration or a bandwidth part (BWP) configuration.

35. The apparatus according to any one of claims 32 to 34, wherein the priority is a channel access priority or a data transmission priority.

36. The apparatus according to claim 31, wherein the determining module is configured to:
determine the first CPE based on a first indication field in the received sidelink control information, wherein the first indication field at least indicates the first CPE.

37. The apparatus according to claim 36, wherein the first indication field further indicates a channel access type.

38. The apparatus according to any one of claims 31 to 37, wherein the reselecting module is configured to:

reselect the target resource in a case where the target resource satisfies a first condition;
wherein the first condition comprises at least one of:

a resource determined based on received first sidelink control information being overlapped with a resource corresponding to the target resource;

a reference signal received power (RSRP) of a physical sidelink control channel (PSCCH) or physical sidelink shared channel (PSSCH) corresponding to received first sidelink control information being greater than or equal to a threshold; or

a length of the first CPE being greater than a length of a CPE of a terminal device.

39. The apparatus according to claim 38, wherein the resource determined based on the received first sidelink control information being overlapped with the resource corresponding to the target resource means that the resource determined based on the received first sidelink control information is overlapped with the resource corresponding to the target resource in a time domain in a same resource block set.

40. The apparatus according to any one of claims 31 to 37, further comprising:

an excluding module, configured to determine a candidate resource set by performing resource exclusion based on the first CPE; and

the reselecting module is configured to reselect the target resource in a case where the target resource does not belong to the candidate resource set.

41. The apparatus according to claim 40, wherein the excluding module is configured to:

initialize a candidate resource set, wherein the candidate resource set comprises at least one resource within a resource selection window; and

exclude a first resource in the candidate resource set in a case where the first resource satisfies a second condition;

wherein the second condition comprises at least one of:

a resource determined based on received first sidelink control information being overlapped with a resource corresponding to the first resource;

a reference signal received power (RSRP) of a physical sidelink control channel (PSCCH) or physical sidelink shared channel (PSSCH) corresponding to received first sidelink control information being greater than or equal to a threshold; or

a length of the first CPE being greater than a length of a CPE of a terminal device.

42. The apparatus according to claim 41, wherein the resource determined based on the received first sidelink control information being overlapped with the resource corresponding to the first resource means the resource determined based on the received first sidelink control information is overlapped with the resource corresponding to the first resource in a time domain in a same resource block set.

43. The apparatus according to any one of claims 31 to 42, wherein the target resource comprises a resource that has been selected by a terminal device and/or a resource that has been indicated by a terminal device.

44. The apparatus according to any one of claims 31 to 43, wherein at least one target resource is configured.

45. The apparatus according to any one of claims 31 to 44, wherein the sidelink control information is first sidelink control information or second sidelink control information scheduled by the first sidelink control information.

46. An apparatus for data transmission, comprising:

a determining module, configured to determine a second cyclic prefix extension (CPE) based on received sidelink control information; and

a transmitting module, configured to transmit data based on the second CPE.

47. The apparatus according to claim 46, wherein the determining module is configured to:

determine, based on at least one piece of received sidelink control information, a first CPE corresponding to each of the at least one piece of sidelink control information; and

determine the second CPE based on the first CPE corresponding to the each of the at least one piece of sidelink control information.

48. The apparatus according to claim 47, wherein the determining module is configured to:
determine the first CPE corresponding to the each of the at least one piece of sidelink control information based on a priority indicated by the each of the at least one piece of sidelink control information.

49. The apparatus according to claim 48, wherein the determining module is configured to:
determine the first CPE corresponding to the at least one piece of sidelink control information from a first CPE set based on the priority indicated by the each of the at least one piece of sidelink control information, wherein the first CPE set comprises at least one CPE.

50. The apparatus according to claim 49, wherein the first CPE set belongs to a resource pool configuration or a bandwidth part (BWP) configuration.

51. The apparatus according to any one of claims 48 to 50, wherein the priority is a channel access priority or a data transmission priority.

52. The apparatus according to claim 47, wherein the determining module is configured to:
determine the first CPE corresponding to the each of the at least one piece of sidelink control information based on a first indication field in the each of the at least one piece of sidelink control information, wherein the first indication field at least indicates the first CPE.

53. The apparatus according to claim 52, wherein the first indication field further indicates a channel access type.

54. The method according to claims 47 to 53, wherein the determining module is configured to:

determine a CPE with a maximum length in the first CPE corresponding to the each of the at least one piece of sidelink control information as the second CPE; or
determine a CPE with a maximum length in a CPE of a terminal device and the first CPE corresponding to the each of the at least one piece of sidelink control information as the second CPE.

55. The apparatus according to claim 46, wherein the determining module is configured to:

determine, based on at least one piece of received sidelink control information, a priority indicated by the each of the at least one piece of sidelink control information; and
determine the second CPE based on the priority indicated by the each of the at least one piece of sidelink control information.

56. The apparatus according to claim 55, wherein the determining module is configured to:

determine a CPE corresponding to a highest priority in the priority indicated by the each of the at least one piece of sidelink control information as the second CPE; or
determine a CPE corresponding to a highest priority in a priority used by a terminal device and the priority indicated by the each of the at least one piece of sidelink control information as the second CPE.

57. The apparatus according to claims 46 to 56, wherein the sidelink control information is first sidelink control information or second sidelink control information scheduled by the first sidelink control information.

58. The apparatus according to claim 57, wherein a resource indicated by the first sidelink control information is overlapped with a resource used for data transmission of a terminal device.

59. The apparatus according to claim 58, wherein the resource indicated by the first sidelink control information being overlapped with the resource used for data transmission of the terminal device means that the resource indicated by the first sidelink control information is overlapped with the resource used for data transmission of the terminal device in a time domain in a same resource block set.

60. The apparatus according to any one of claims 46 to 59, wherein a moment when a terminal device determines the second CPE is prior to the data transmission and/or after a first duration prior to the data transmission.

61. A terminal device, comprising: a processor and a memory; wherein

the memory is configured to store one or more computer programs; and

the processor is configured to load and run the one or more computer programs to perform the method as defined in any one of claims 1 to 15 or the method as defined in any one of clams 16 to 30.

62. A computer-readable storage medium, storing one or more computer programs, wherein the one or more computer programs, when loaded and run by a processor, cause the processor to perform the method as defined in any one of claims 1 to 15 or the method as defined in any one of clams 16 to 30.

63. A chip, comprising: a programmable logic circuit and/or one or more program instructions, wherein the chip, when running, is caused to perform the method as defined in any one of claims 1 to 15 or the method as defined in any one of clams 16 to 30.

64. A computer program product, comprising: one or more computer instructions stored in a computer-readable storage medium, wherein a processor is configured to load and run the one or more computer instructions from the computer-readable storage medium to perform the method as defined in any one of claims 1 to 15 or the method as defined in any one of clams 16 to 30.

FIG. 1

FIG.2

PSSCH    PSCCH

FIG. 3

(a)

(b)

FIG. 4

Interlace 0    Interlace 1

FIG. 5

FIG. 6

FIG. 7

FIG. 8

FIG. 9

FIG. 10

| | 1110 |
|---|---|
| Determinesing, by a terminal device, a first CPE based on received sidelink control information | |

| | 1120 |
|---|---|
| Reselecting, by the terminal device, a target resource based on the first CPE | |

FIG. 11

FIG. 12

FIG. 13

| | 1410 |
|---|---|
| Determining, by a terminal device, a second CPE based on received sidelink control information | |

| | 1420 |
|---|---|
| Transmitting, by the terminal device, data based on the second CPE | |

FIG. 14

FIG. 15

FIG. 16

FIG. 17

FIG. 18

## INTERNATIONAL SEARCH REPORT

| International application No. |
| --- |
| **PCT/CN2022/139506** |

**A. CLASSIFICATION OF SUBJECT MATTER**

G09G 5/00(2006.01)i

According to International Patent Classification (IPC) or to both national classification and IPC

**B. FIELDS SEARCHED**

Minimum documentation searched (classification system followed by classification symbols)

IPC:G09G

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; 3GPP; IEEE; CNKI: 侧行, 侧链, 副链, 直行, 控制信息, 循环前缀, 延长, 扩展, 重选, 资源, sidelink, SL, control information, SCI, PSCCH, CPE, cyclic prefix, extend+, reselect+, resource

**C. DOCUMENTS CONSIDERED TO BE RELEVANT**

| Category* | Citation of document, with indication, where appropriate, of the relevant passages | Relevant to claim No. |
| --- | --- | --- |
| X | WO 2020025042 A1 (GUANGDONG OPPO MOBILE TELECOMMUNICATIONS CORP., LTD.) 06 February 2020 (2020-02-06) description, page 4, line 10-page 9, line 41 | 16, 27, 30, 46, 57, 60-64 |
| A | WO 2020221241 A1 (SHARP KK et al.) 05 November 2020 (2020-11-05) entire document | 1-64 |
| A | US 2021352710 A1 (ZTE CORP.) 11 November 2021 (2021-11-11) entire document | 1-64 |
| A | WO 2022154464 A1 (LG ELECTRONICS INC.) 21 July 2022 (2022-07-21) entire document | 1-64 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 August 2023** | **07 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| International application No. |
| --- |
| **PCT/CN2022/139506** |

| Patent document cited in search report | | | Publication date (day/month/year) | Patent family member(s) | Publication date (day/month/year) |
| --- | --- | --- | --- | --- | --- |
| WO | 2020025042 | A1 | 06 February 2020 | None | |
| WO | 2020221241 | A1 | 05 November 2020 | None | |
| US | 2021352710 | A1 | 11 November 2021 | None | |
| WO | 2022154464 | A1 | 21 July 2022 | None | |

Form PCT/ISA/210 (patent family annex) (July 2022)